# EUROPÄISCHE PATENTANMELDUNG

(11) **EP 0 837 030 A1**
(43) Veröffentlichungstag der Anmeldung: **22.04.1998**
(21) Anmeldenummer: 96113537.3
(22) Anmeldetag: 23.08.1996
(51) Int. Cl.: B67D 5/04, F16L 11/22

(54) **Zapfschlauch**

(71) Anmelder: SCHEIDT & BACHMANN GMBH, D-41238 Mönchengladbach (DE)
(72) Erfinder: Baumann, Gerd, Dipl.-Ing., 52445 Titz (DE); Dahlmanns, Christoph, Dipl.-Ing., 52511 Geilenkirchen (DE)
(74) Vertreter: Stenger, Watzke & Ring Patentanwälte

(57) **Zusammenfassung**

Die Erfindung betrifft einen Schlauch 1 aus einem flexiblen Material zum Verbinden eines Kraftstoffanschlusses einer Zapfstelle mit einem Zapfventil. Um ein wirtschaftlich zu fertigendes und flexibles Abgabesystem für Kraftstoff zu schaffen, wird vorgeschlagen, daß in dem flexiblen Material mindestens zwei getrennte Strömungskanäle 2 ausgebildet sind.

## Beschreibung

Die Erfindung betrifft einen Schlauch aus einem flexiblen Material zum Verbinden eines Kraftstoffanschlusses einer Zapfstelle mit einem Zapfventil.

Die aus der Praxis bekannten Zapfschläuche an Zapfanlagen bestehen aus einem Schlauch aus einem flexiblen Material, durch den der aus einem Erdtank emporgepumpte Kraftstoff ausgehend von einem Kraftstoffanschluß einer jeden Zapfstelle zu einem Zapfventil strömt, über welches der Benutzer der Zapfstelle den Kraftstoff entnehmen kann. Bei diesen aus der Praxis bekannten Zapfschläuchen an Tankanlagen ist es notwendig, daß für jede Kraftstoffsorte, beispielsweise Diesel, Benzin bleifrei, Super bleifrei oder Super plus, ein gesonderter Zapfschlauch verwendet wird, da in einem jeden Zapfschlauch nur ein Strömungskanal für ein Medium ausgebildet ist.

Weiterhin ist es aus der Praxis bei Tankanlagen mit Gasrückführung bekannt, neben der Befüllung von Kraftfahrzeugen mit Kraftstoff gleichzeitig über den flexiblen Schlauch die aus dem zu betankenden Tank austretenden Gase in den Erdtank zurückzuführen. Zu diesem Zweck besteht der Zapfschlauch aus zwei ineinandergesteckten, koaxial angeordneten Schläuchen, wobei der innere Schlauch zur Rückführung der aus dem Tank austretenden Gase in den Erdtank dient, während über den den Gasrückführungsschlauch koaxial umgebenden Schlauch der Kraftstoff zugeführt wird.

Die Verwendung jeweils eines Schlauches für eine jede Kraftstoffsorte ist sehr kostenintensiv und nimmt darüber hinaus sehr viel Platz ein. Auch die Herstellung der koaxial angeordneten Schläuche für die Betankung mit Gasrückführung hat sich als sehr kostenintensiv erwiesen.

Der Erfindung liegt die **Aufgabe** zugrunde, ein wirtschaftlich zu fertigendes und darüber hinaus flexibles Abgabesystem für Kraftstoffe zu schaffen.

Die **Lösung** dieser Aufgabenstellung ist erfindungsgemäß dadurch gekennzeichnet, daß in dem flexiblen Material mindestens zwei getrennte Strömungskanäle ausgebildet sind. Durch diese gleichzeitige Ausbildung mehrerer Strömungskanäle in einem Zapfschlauch ist es möglich, durch einen Zapfschlauch verschiedene Kraftstoffsorten gleichzeitig oder nacheinander zu fördern und/oder direkt über den Zapfschlauch das aus dem zu betankenden Tank ausströmende Gas in den Erdtank zurückzuführen.

Gemäß einer bevorzugten Ausführungsform der Erfindung sind in dem flexiblen Material mehrere Strömungskanäle für identische oder unterschiedliche abzugebende Kraftstoffe und mindestens ein Strömungskanal für die Gasrückführung ausgebildet. Ein solchermaßen ausgestalteter Zapfschlauch ist besonders flexibel einsetzbar, da gleichzeitig oder nacheinander verschiedene Kraftstoffsorten durch diesen Zapfschlauch geleitet werden können und auch direkt durch diesen Zapfschlauch die Gasrückführung zum Erdtank erfolgen kann.

Weiterhin wird vorgeschlagen, daß ein jeder in dem flexiblen Material ausgebildeter Strömungskanal über die gesamte Länge des flexiblen Materials einen im wesentlichen konstanten Querschnitt aufweist. Die Querschnittsflächen und Querschnittsformen der einzelnen in dem flexiblen Material ausgebildeten Strömungskanäle können jedoch unterschiedlich ausgebildet sein.

Gemäß bevorzugten Ausführungsformen der Erfindung sind die Strömungskanäle rund und/oder kreisringsegmentförmig ausgebildet.

Die Formstabilität eines erfindungsgemäß ausgebildeten Zapfschlauches kann dadurch erhöht werden, daß die einzelnen Strömungskanäle durch im wesentlichen radial verlaufende Stege aus dem flexiblen Material voneinander getrennt sind.

Schließlich wird mit der Erfindung vorgeschlagen, daß das flexible Material ein Gummi-Material ist.

Weitere Einzelheiten und Merkmale der Erfindung ergeben sich aus der nachfolgenden Beschreibung der zugehörigen Zeichnung, in der drei Ausführungsbeispiele eines erfindungsgemäß ausgebildeten Zapfschlauches dargestellt sind. In der Zeichnung zeigt:
- Fig. 1: einen Querschnitt durch eine erste Ausführungsform eines Zapfschlauches;
- Fig. 2: einen Querschnitt durch eine zweite Ausführungsform eines Zapfschlauches und
- Fig. 3: einen Querschnitt durch eine dritte Ausführungsform eines Zapfschlauches.

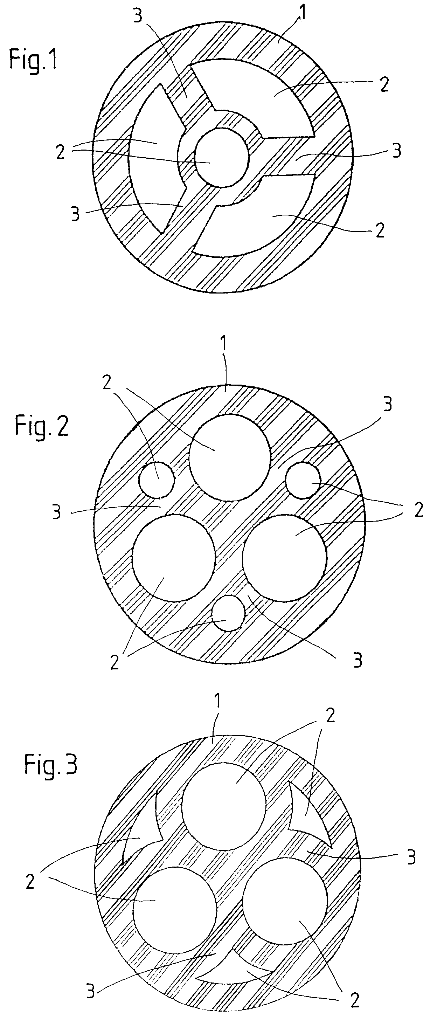

Bei dem in Fig. 1 dargestellten ersten Ausführungsbeispiel, welches einen Querschnitt durch einen Zapfschlauch 1 zeigt, sind innerhalb des Zapfschlauches 1 vier Strömungskanäle 2 ausgebildet. Bei dem dargestellten Ausführungsbeispiel ist in der Mitte des Zapfschlauches ein runder Strömungskanal 2 ausgebildet, welcher koaxial von drei kreisringsegmentförmigen Strömungskanälen 2 umgeben ist. In der Praxis kann ein solchermaßen ausgestalteter Zapfschlauch beispielsweise so verwendet werden, daß über die drei kreisringsegmentförmig ausgebildeten Strömungskanäle 2 identische und/oder unterschiedliche Kraftstoffe gefördert werden, während durch den mittig angeordneten runden Strömungskanal 2 die Gasrückführung zu einem (nicht dargestellten) Erdtank erfolgt. Bei dem dargestellten Ausführungsbeispiel sind die einzelnen kreisringsegmentförmig ausgebildeten Strömungskanäle 2 durch radial verlaufende Stege 3 voneinander getrennt. Neben der Trennung der einzelnen Strömungskanäle 2 voneinander wird durch die Ausbildung der Stege 3 zusätzlich zu der Materialbeschaffenheit des flexiblen Materials des Zapfschlauches 1 eine Erhöhung der Formstabilität eines solchermaßen ausgebildeten Zapfschlauches 1 erreicht.

Bei dem in Fig. 2 dargestellten zweiten Ausführungsbeispiel sind in dem flexiblen Material des Zapfschlauches 1 insgesamt sechs runde Strömungskanäle 2 ausgebildet, wobei jeweils drei Strömungskanäle 2 einen großen Durchmesser aufweisen und die übrigen drei Strömungskanäle 2 einen gleichen, aber kleineren Durchmesser aufweisen. Bei diesem Ausführungsbeispiel kann die Gasrückführung beispielsweise über die drei kleineren Strömungskanäle 2 erfolgen, während über die einen größeren Querschnitt aufweisenden übrigen drei Strömungskanäle 2 Kraftstoffe förderbar sind.

In Fig. 3 ist schließlich ein drittes Ausführungsbeispiel eines mit mehreren Strömungskanälen 2 versehenen Zapfschlauches 1 dargestellt. Bei dieser Ausführungsform sind in dem flexiblen Material des Zapfschlauches 1 drei runde Strömungskanäle 2 gleichmäßig verteilt in dem flexiblen Material des Zapfschlauches 1 ausgebildet. In den Zwischenräumen zwischen den runden Strömungskanälen 2 sind drei im wesentlichen dreieckförmige Strömungskanäle 2, beispielsweise für die Gasrückführung, ausgebildet.

Die in den Abbildungen 1 bis 3 dargestellten Ausführungsformen zur Ausbildung eines mehrere Strömungskanäle 2 aufweisenden Zapfschlauches 1 sind selbstverständlich nur beispielhaft und beschränken die Ausbildung eines Zapfschlauches 1 nicht auf diese Ausführungsformen und Ausgestaltungen der Strömungskanäle 2. Die Strömungskanäle 2 können jede beliebige Form aufweisen, wobei es unter anderem fertigungstechnisch vorteilhaft ist, daß der Querschnitt eines jeden Strömungskanals 2 über die gesamte Länge des Zapfschlauches 1 konstant ist. Bei den dargestellten Ausführungsformen können die Strömungskanäle 2 auch ausschließlich zur Förderung von Kraftstoff verwendet werden, das heißt, daß die Nutzung eines oder mehrerer Strömungskanäle 2 zur Gasrückführung nur fakultativ ist. Die durch die Strömungskanäle 2 geförderten Kraftstoffe können hierbei selbstverständlich auch Kraftstoffgemische, beispielsweise Öl-Benzin-Gemische für Zweitaktmotoren, sein.

### Bezugszeichenliste

1 Zapfschlauch
2 Strömungskanal
3 Steg

## Patentansprüche

1. Schlauch aus einem flexiblen Material zum Verbinden eines Kraftstoffanschlusses einer Zapfstelle mit einem Zapfventil,
**dadurch gekennzeichnet,**
daß in dem flexiblen Material mindestens zwei getrennte Strömungskanäle (2) ausgebildet sind.

2. Zapfschlauch nach Anspruch 1, dadurch gekennzeichnet, daß in dem flexiblen Material mehrere Strömungskanäle (2) für identische oder unterschiedliche abzugebende Kraftstoffe und mindestens ein Strömungskanal (2) für die Gasrückführung ausgebildet sind.

3. Zapfschlauch nach Anspruch 1 oder 2, dadurch gekennzeichnet, daß jeder Strömungskanal (2) einen über die gesamte Länge des flexiblen Materials im wesentlichen konstanten Querschnitt aufweist, wobei die Querschnittsflächen und Querschnittsformen einzelner in dem flexiblen Material ausgebildeten Strömungskanäle (2) unterschiedlich ausbildbar sind.

4. Zapfschlauch nach einem der Ansprüche 1 bis 3, dadurch gekennzeichnet, daß die Strömungskanäle (2) rund und/oder kreisringsegmentförmig ausgebildet sind.

5. Zapfschlauch nach einem der Ansprüche 1 bis 4, dadurch gekennzeichnet, daß die einzelnen Strömungskanäle (2) durch im wesentlichen radial verlaufende Stege (3) aus dem flexiblen Material voneinander getrennt sind.

6. Zapfschlauch nach einem der Ansprüche 1 bis 5, dadurch gekennzeichnet, daß das flexible Material ein Gummi-Material ist.
